# EUROPEAN PATENT SPECIFICATION

(11) **EP 0 316 943 B1**
(45) Date of publication and mention of the grant of the patent: **19.04.1995**
(21) Application number: 88119225.6
(22) Date of filing: 18.11.1988
(51) Int. Cl.: G06F 1/04

(54) **Semiconductor integrated circuit having a plurality of oscillation circuits**
Integrierte Halbleiterschaltung mit mehreren Taktschaltkreisen
Circuit intégré à semi-conducteur possédant plusieurs circuits d'horloge

(30) Priority: 20.11.1987 JP 293796/87
(43) Date of publication of application: 24.05.1989
(73) Proprietor: HITACHI, LTD., Chiyoda-ku, Tokyo 100 (JP)
(72) Inventor: Ito, Takashi, Kokubunji-shi Tokyo (JP); Ishibashi, Kenichi, Tachikawa-shi Tokyo (JP); Funatsu, Kenzo, Musashimurayama-shi Tokyo (JP); Yashiki, Naoki, Kodaira-shi Tokyo (JP); Iwata, Katsumi, Kokubunji-shi Tokyo (JP)
(74) Representative: Strehl Schübel-Hopf Groening & Partner

(56) References cited:
- EP-A- 0 190 554
- EP-A- 0 242 010
- US-A- 4 229 699
- US-A- 4 463 440

## Description

The present invention relates to a semiconductor integrated circuit device, and more specifically to technology that can be effectively utilized for a semiconductor integrated circuit device such as a one-chip microcomputer having, for example, a time-keeping function.

In an electronic desk-top calculator constituted by a microcomputer and semiconductor integration circuits, provision is made of an oscillation circuit using an oscillator such as quartz oscillator to produce clock signals (hereinafter simply referred to as system clocks) for operating the system. When such a data processing system is intermittently operated, the original oscillation is stopped and operations of the microprocessor and memory are temporarily stopped in order to reduce the consumption of electric power. For this purpose, a halt function is provided to stop the system clock upon receipt of a control signal from an external unit or an instruction from the microprocessor. A clock generating system having such a performance is described in US-A- 4 463 440.

In the semiconductor integrated circuit device such as a microcomputer having timekeeping function, however, the timekeeping function cannot be stopped if the oscillation circuit is commonly utilized for keeping the time and for the original oscillation; i.e., it is not allowed to add the holding function. Therefore, there has been proposed a microcomputer mounting a quartz oscillation circuit of 32.768 KHz for timekeeping and a cheaply constructed CR oscillation circuit or an oscillation circuit using a ceramic oscillator for the original oscillation (about 4 MHz). The microcomputer equipped with such two oscillation circuits has been described, for example, in "Hitachi 4-Bit 1-Chip Microcomputer System, HMCS 40 Series, LCD-III, User's Manual", third edition, No. 4, Hitachi, Ltd., June, 1984, pp. 4 and 24-25.

In the microcomputer, when the original oscillation operation of the above-mentioned high frequency is stopped under the holding condition, the oscillation circuit on the side of the original oscillation must be energized at least after every second to supply a system clock to the microprocessor in order to realize the timekeeping function. It was therefore found by the present inventors that a stabilization waiting time becomes relatively long before the oscillation is resumed, and unstable oscillation operation of a high frequency takes place during that moment consuming large amounts of electric power.

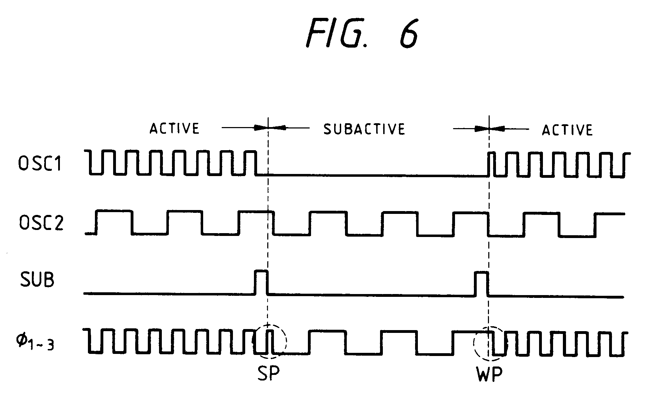

It was further studied by the present inventors to form system clocks of a low frequency by switching into an oscillation output of the oscillation circuit for timekeeping during the halting operation (subactive). In this case, it was found by the present inventors that frequencies of basic clock pulses for timekeeping and of basic clock pulses for the system do not establish a ratio of an integer number such as about 32 KHz and about 4 MHz; i.e., oscillation operations are performed out of synchronism. Therefore, synchronism is not maintained when the two clocks are to be switched (active/subactive), and extremely narrow pulses SP and undesirably wide pulses WP are formed as system clocks as shown in Fig. 6. As a result, the system may undergo erroneous operation when the clocks are to be switched.

Further, from US-A-4 229 699 a multiple clock selection system for switching among a plurality of input clock signals to produce an output clock signal is known. This system discloses all the features included in the first part of claim 1.

### Summary of the Invention

The object of the present invention is to provide a semiconductor integrated circuit, in particular a microcomputer, with a time keeping function having a reliable performance during the clock switching operation and a reduced power consumption.

This object is met by a semiconductor integrated circuit according to claim 1.

Preferred embodiments of the invention are disclosed in the subclaims.

A representative example will now be described briefly. That is, when oscillation output signals are selectively transmitted to a clock generating circuit via a multiplexer, the oscillation output signals being generated by a first oscillation circuit whose oscillation operation of a relatively high frequency is controlled by predetermined control signals and by a second oscillation circuit which steadily performs the oscillation operation of a relatively low frequency, the clock-generating operation is started in synchronism with the oscillation output that is switched via a mode which once stops the operation of the clock generating circuit.

For example, there are provided a clock switching circuit, a flag which designates which clock be used by the clock switching circuit, and a flag which indicates whether the clock selected by the clock switching circuit be supplied to the system or not, and wherein the flags are set according to an interrupt signal or a program instruction, a mode which once shuts off all clocks (hereinafter referred to as stop mode or watch mode) is necessarily passed through when an ordinary operation mode (hereinafter referred to as standard operation mode or active mode) is to be transferred to a mode of low power consumption (hereinafter referred to as low-power-consumption mode or subactive mode) or vice versa, and the clocks are switched during this moment.

According to the above-mentioned means, operation of the oscillation circuit which performs oscillation operation at a relatively high frequency is stopped as required and when the clock frequency is to be switched, the clock-generating operation is resumed in synchronism with an oscillation frequency that is switched after the operation of the clock generating circuit is once stopped. When the clock pulses having dissimilar frequencies are to be switched, therefore, undesired hair-like clock pulses are not produced and the operation is carried out stably.

### BRIEF DESCRIPTION OF THE DRAWINGS

Fig. 1 is a block diagram of an embodiment in which the present invention is adapted to a single-chip microcomputer;
Fig. 2 is a diagram explaining the condition of mode transition in a microcomputer to which the present invention is adapted;
Fig. 3 is a block diagram of another embodiment in which the present invention is adapted to the single-chip microcomputer;
Fig. 4 is a diagram of waveforms for explaining the operation;
Fig. 5 is a diagram of status transition for explaining an example of the operation; and
Fig. 6 is a diagram of waveforms for explaining the operation for switching the clock pulses that can be taken into consideration prior to the present invention.

### DESCRIPTION OF THE PREFERRED EMBODIMENTS

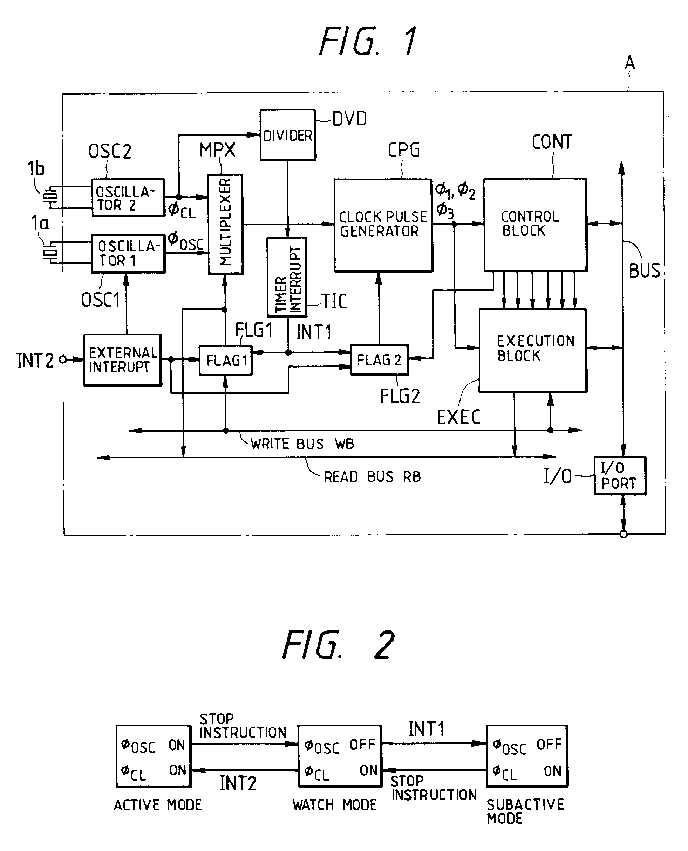

An embodiment in which the invention is adapted to a single-chip microcomputer will now be described in conjunction with Figs. 1 and 2.

Though there is no particular limitation, the circuit blocks surrounded by a chain line A are formed on a single semiconductor chip such as a single crystalline silicon substrate.

The single-chip microcomputer according to this embodiment is equipped with two oscillation circuits consisting of an oscillation circuit OSC₁ for generating system clocks and an oscillation circuit OSC₂ for generating timekeeping clocks. The oscillation circuit OSC₁ is provided with a ceramic oscillator 1a which is located on the external side and the oscillation circuit OSC₂ is provided with a quartz oscillator 1b which is located on the external side.

Original oscillation signals ⌀_{OSC} which constitute system clocks of 4 MHz generated by the oscillation circuit OSC₁ and original oscillation signals ⌀_{CL} which constitute timekeeping clocks of 32.768 KHz generated by the oscillation circuit OSC₂ are supplied to a multiplexer MPX where clocks of either side are selected depending upon the set condition of a flag FLG₁ that designates clocks and are supplied to a clock pulse generating circuit CPG.

The clock pulse generating circuit CPG divides the frequency of oscillation signals ⌀_{OSC} or ⌀_{CL} supplied thereto via the multiplexer MPX or processes them to form several kinds of internal clocks ⌀₁, ⌀₂, ⌀₃, ..... having suitable frequencies and different phases. The internal clocks ⌀₁, ⌀₂, ⌀₃, ..... are supplied to a control block CONT which consists of a ROM that stores programs, a program counter that successively reads instructions from the program ROM, and an instruction decoder that decodes the instruction codes that are read out to form control signals for the circuits in the microcomputer, and are further supplied to an execution block EXEC which consists of various registers, ALU (arithmetic logic unit) and RAM that serves as a work area. The program counter in the control block CONT and the execution block EXEC are connected to an input/output port I/O via a bus BUS.

In this embodiment, there are provided a stop flag FLG₂ that can be set by a suitable instruction called stop instruction, and a status signal that indicates the content of the stop flag FLG₂ is supplied to the clock pulse generating circuit CPG to control the gate that is provided at the inlet thereof. Concretely speaking, when "1" is set to the flag FLG₂ due to the stop instruction, the oscillation circuit OSC₁ for generating system clocks ceases to oscillate, and a mode (hereinafter referred to as stop mode or watch mode) is established in which no clock is supplied from the multiplexer MPX to the clock pulse generating circuit CPG and none of the internal clocks ⌀₁, ⌀₂, ⌀₃, ..... are generated. Therefore, the system is under the stop condition in which it does not operate at all.

To get out of the stop mode, on the other hand, there is provided a timer interrupt circuit TIC which generates a timer interrupt signal INT₁ based on a signal from a frequency-dividing circuit DVD that divides the frequency of original oscillation signals ⌀_{CL} that constitute timekeeping clocks. The interrupt signal INT₁ from the timer interrupt circuit TIC is supplied to the stop flag FLG₂ to clear it to "0", and is also supplied to the flag FLG₁ to set it. After the flag FLG₁ is set, the multiplexer MPX which receives the status signal supplies to the clock pulse generating circuit CPG the original oscillation signal ⌀_{CL} of timekeeping clock instead of the original oscillation signal ⌀_{OSC} of system clock. Therefore, the system is operated by the clocks of a low frequency based on the signals ⌀_{CL} and assumes the low-power-consumption mode (subactive mode) for carrying out the operation such as addition and the like for timekeeping function.

In this embodiment, furthermore, an external interrupt control circuit EIC is provided to receive an interrupt signal INT₂ from the external unit. When an external interrupt signal INT₂ is input in the stop mode (watch mode), the oscillation circuit OSC₁ starts the oscillation, and the stop flags FLG₂ and FLG₁ are cleared. When the flag FLG₁ is cleared, the multiplexer MPX supplies original oscillation signals ⌀_{OSC} of system clocks to the clock pulse generating circuit CPG. Therefore, the system assumes the standard operation mode (active mode) in which it is operated at high speeds by the clocks of a high frequency formed by the clock pulse generating circuit CPG.

Fig. 2 shows the transition condition of mode according to the above embodiment.

According to the above embodiment as will be obvious from Fig. 2, the stop instruction is executed at the final stage of execution of an ordinary system program or at the final stage of a program for the timekeeping operation in the low-power-consumption mode, so that the system is transferred to the stop mode (watch mode) in which the system clocks are all extinguished. Thereafter, the system gets out of the stop mode (watch mode) in response to the interrupt and assumes the low-power-consumption mode (subactive mode) or the standard operation mode (active mode) depending upon the content of the flag FLG₁.

Therefore, when the system is transferred from the standard operation mode to the low-power-consumption mode or vice versa, the clocks are not suddenly changed from ⌀_{OSC} to ⌀_{CL} or from ⌀_{CL} to ⌀_{OSC}. Therefore, extremely short clock pulses are not formed and the system is not erroneously operated.

In the above-mentioned embodiment, the stop mode is transferred again to the low-power-consumption mode in case the timer interrupt INT₁ is input prior to the input of interrupt signal INT₂ from the external unit during the stop mode that has transferred from the low-power-consumption mode.

In the clock switching circuit of the above embodiment, furthermore, the flag FLG₁ is connected to the internal buses WB, RB to set the content of the flag FLG₁ depending upon the instruction. In executing the stop instruction, therefore, the content of the flag FLG₁ is arbitrarily set in advance, and the system is transferred to a desired mode of either a first mode such as the standard operation mode or a second mode such as the low-power-consumption mode when the next interrupt signal has entered.

In the above-mentioned embodiment, operation of the oscillation circuit OSC₁ on the system clock side is stopped during the stop mode and the low-power-consumption mode. It is, however, also allowable to transfer the system from the standard operation mode to the low-power-consumption mode or vice versa by controlling the switching of clocks and the interrupt and supply of clocks while the oscillation circuit is in operation.

In the above-mentioned embodiment, furthermore, the flags FLG₁ and FLG₂ may be independently constituted by themselves, or a bit in the control register or any bit in the RAM may be allotted thereto.

According to the above-mentioned embodiment as described above, the microcomputer that includes two oscillation circuits of dissimilar oscillation frequencies is provided with a clock switching circuit, a flag that designates which clocks be used based on the clock switching circuit, and a flag which indicates whether the clocks selected by the clock switching circuit be supplied to the system or not, and the flags are set depending on the interrupt signal or the program instruction. When the system is transferred from the ordinary operation mode to the low-power-consumption mode or vice versa, the stop mode (watch mode) is passed through to shut off all clocks, and the clocks are switched during this moment. Therefore, all of the clocks are once extinguished at the time of switching the clocks, and synchronism is maintained among the clocks. Hence, the system does not operate erroneously and is transferred from the standard operation mode (active mode) to the low-power-consumption mode (subactive mode) or vice versa. Accordingly, clocks are switched without adversely affecting the operation of the system, and the low-power-consumption mode is realized.

In the foregoing was concretely described the invention accomplished by the present inventors by way of an embodiment. The present invention, however, is in no way limited to the above-mentioned embodiment only but can be modified in a variety of other ways without departing from the spirit and scope of the invention. Though the above embodiment has dealt with the microcomputer provided with two oscillation circuits for generating the clocks, the invention can also be adapted to the one that generates three or more kinds of clocks. According to the present invention, furthermore, the mode is controlled using two flags, i.e., a stop flag that is set by the stop instruction and that indicates the stop condition of all clocks and a clock designation flag which indicates the kind of clocks to be supplied after the clock stop condition is released, i.e., which indicates the direction of mode to which the system will transfer after the clock stop condition is released. In a system in which the two operation modes are alternatingly repeated, however, the flag for designating the clocks may be eliminated, and the multiplexer MPX may be switched based on the stop instruction or the interrupt.

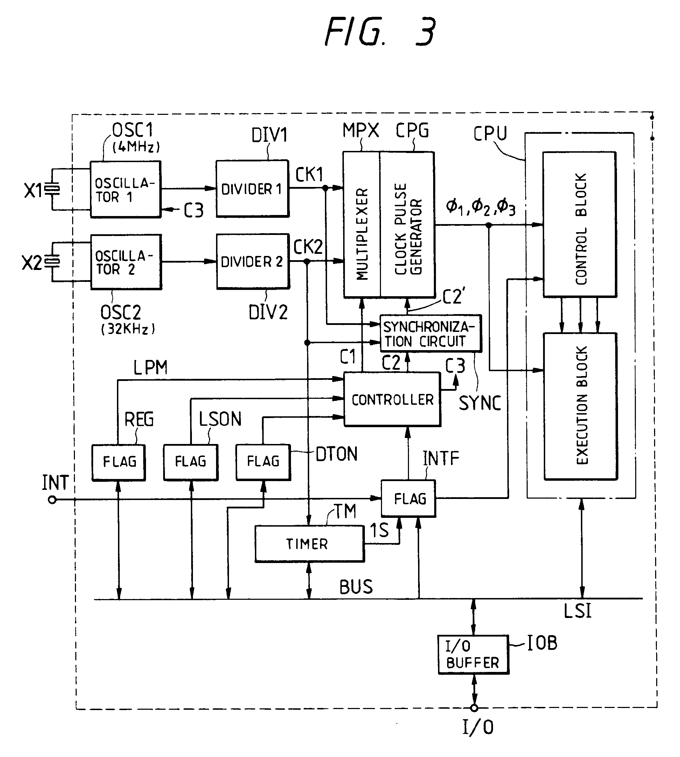

Fig. 3 is a block diagram of another embodiment of the case when the present invention is adapted to a single-chip microcomputer, wherein the circuit blocks surrounded by a broken line are formed on a semiconductor substrate such as of single crystalline silicon by the widely known technology for fabricating the semiconductor integrated circuits, though there is no particular limitation.

The microcomputer according to this embodiment is provided with a first oscillation circuit (original oscillation circuit) OSC1 for generating system clocks and a second oscillation circuit OSC2 for producing reference time pulses for timekeeping. The first oscillation circuit OSC1 is provided with, for example, a ceramic oscillator X1 on the outside to oscillate at a frequency which is as relatively high as about 4 MHz. To reduce the consumption of electric power, oscillation operation of the oscillation circuit OSC1 is controlled by control signals C3 that will be described later. The second oscillation circuit OSC2 is provided with a quartz oscillator X2 to oscillate at a frequency which is as relatively low as 32.768 KHz. The oscillation circuit OSC2 is provided for performing the timekeeping operation and performs oscillation operation steadily.

The output signals of the oscillation circuits OSC1 and OSC2 are converted into basic clock pulses CK1 and CK2 through frequency-dividing circuit DiV1 and DiV2 that also work to shape waveforms. The basic clock pulses CK1 and CK2 are supplied to the clock pulse generating circuit CPG via the multiplexer MPX which is switched by the control circuit CONT. The multiplexer MPX selectively transmits the basic clock pulses CK1 or CK2 to the clock pulse generating circuit CPG depending upon the operation mode that will be described later.

The clock pulse generating circuit CPG divides the frequency of the basic clock pulses CK1 or CK2 that are input via the multiplexer MPX or processes them to form a plurality of system clocks ⌀1 to ⌀3, etc. having different phases.

The system clocks ⌀1 to ⌀3, etc. are supplied to a control block which consists of a ROM (read-only memory) that stores programs, a program counter that successively reads instructions from the program ROM, and an instruction decoder that decodes the instruction codes that are read out to form control signals for the circuits in the microcomputer, and are supplied to an execution block which consists of various registers, ALU (arithmetic logic operation unit) and RAM (random access memory) that serves as a work area. A microcomputer CPU is constituted by the above-mentioned control block and the execution block. The program counter in the control block and the execution block are connected via buses BUS to an input/output port I/O, a timer circuit TM, and various control flags. The internal buses BUS are made up of address bus, data bus and control bus.

The clock pulse generating circuit CPG of this embodiment does not steadily form the above-mentioned system clocks ⌀1 to ⌀3, etc. in response to the basic clock pulses CK1 or CK2 input through the multiplexer, and is controlled for its operation by the control signals C2′. In order that the system clocks ⌀1 to ⌀3, etc. are generated in synchronism with the switched basic clock pulses CK1 or CK2, the control signals C2 formed by the controller CONT are passed through the synchronizing circuit SYNC to maintain synchronism with the basic clock pulses CK1 or CK2.

The basic clock pulses CK2 for timekeeping are supplied to the timekeeping circuit TM which divides the frequency of the basic clock pulses CK2 to form time pulses such as 1-second pulses 1S. The time pulses lS are supplied to an interrupt flag INTF to serve as a factor of interrupt. The interrupt processing by the time pulse 1S designates timekeeping operation for the control block in the CPU. For example, if there develops interrupt due to the time pulse 1S, the control block in the CPU reads the data of seconds stored in the RAM that serves as a work area, adds +1 thereto, and writes it onto the RAM as new data of a unit of a second. In this case, if there is a carry, +1 is added to the data of minute in the same manner as described above. Likewise, if there is a carry, the data of hour, the data of day or the data of week is increased. As described above, the time-keeping operation is realized by fundamentally effecting the interrupt after every second to increase the data of second, and by adding +1 to other data depending upon the presence or absence of carry.

It is also allowable to carry out the timekeeping operation in shorter than one second by inputting suitable offset data from the internal buses BUS to the timekeeping circuit TM and generating the time pulse 1S at a period of shorter than 1 second.

According to this embodiment, there is provided a flag REG that can be set by a suitable instruction called stop instruction STOP, and a status signal LPM (low power mode) that represents the content of the stop flag REG is supplied to the control circuit CONT. The signal LPM consists of two bits, i.e., a stop signal STP and a stand-by signal SBY to produce three statuses consisting of the aforementioned active mode, a watch mode and a subactive mode that will be described later.

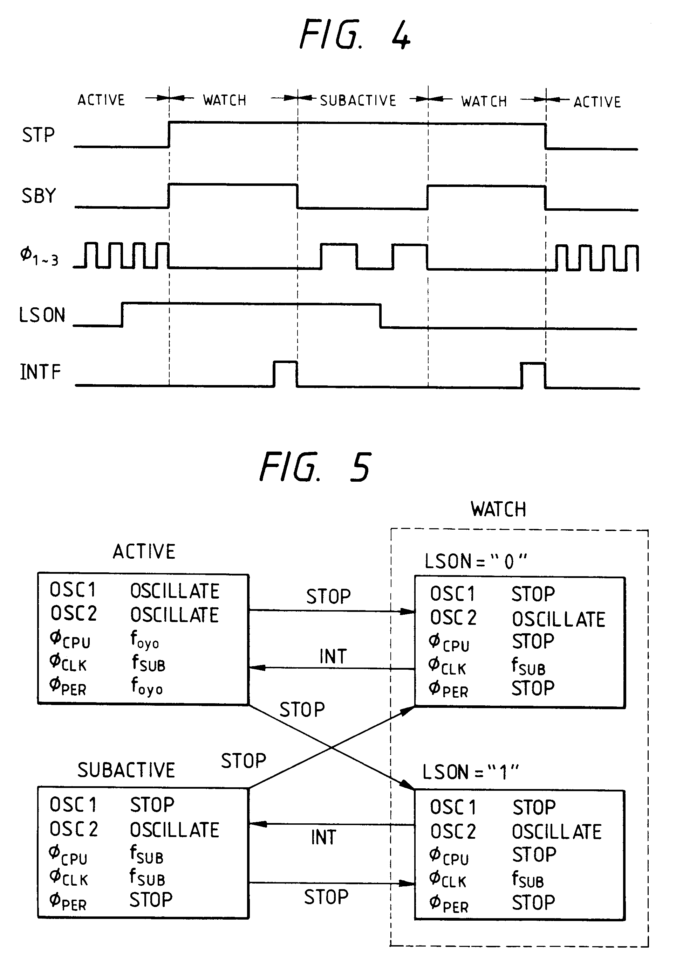

In the active mode, the flag REG is cleared as shown in the waveform diagram of Fig. 4 and in the status transition diagrams of Fig. 5. In response to the low level of signals STP and SBY, the control circuit CONT places the oscillation circuit OSC1 under the oscillating condition upon receipt of control signal C3, and switches the multiplexer MPX to the side of the basic clock pulses. CK1. The clock pulse generating circuit CPG therefore generates system clocks ⌀_{CPU} (⌀1 to ⌀3, etc.) of a high frequency f_{cyc} corresponding to the basic clock pulses CK1.

In such an active mode, if the stop instruction STOP is executed and the signals STP and SBY are set to the high level relative to the stop flag REG, the control circuit CONT designates operation for transferring the system from the active mode to the watch mode depending upon the high level (logic "1"). That is, in the watch mode, the oscillation circuit OSC1 stops the oscillation operation and the clock pulse generating circuit CPG stops its operation, too. Therefore, the system clocks ⌀_{CPU} (⌀1 to ⌀3, etc.) are not supplied to the CPU. In the watch mode, there are produced neither the system clocks ⌀_{CPU} nor the clock pulses ⌀_{PER} for peripheral circuits. However, the clock pulses ⌀_{CLK} that serve as time bases for maintaining the timekeeping function have a low frequency f_{SUB} based on the basic clock pulses CK2.

A flag LSON designates the low-speed-on condition and means that it is on the upper status in the transition diagram of Fig. 5 when it has the logic "0", and means that it is on the lower status when it has the logic "1". As will be described later, this is used as an indication when the system is transferred from the watch mode to other active mode or subactive mode. For example, when the timekeeping function only is to be carried out, the flag LSON is set to the logic "1" prior to executing the stop instruction STOP.

In the watch mode as described above, the oscillation circuit OSC2 for timekeeping is under the oscillating condition, and the timekeeping circuit TM only is in operation in response thereto. Therefore, other circuits assume the mode in which the current is not logically consumed.

In this embodiment, when the timekeeping function only is to be carried out by setting the logic "1" to the flag LSON, the interrupt flag INTF makes access to the control circuit CONT when a 1-second pulse IS is produced from the timekeeping circuit TM and designates the change of mode into the subactive mode. In response thereto, the control circuit CONT switches the multiplexer MPX to the basic clock pulses CK2. The synchronizing circuit SYNC generates control signals C2′ in synchronism with the switched basic clock pulses CK2, so that the clock pulse generating circuit CPG resumes its operation. Therefore, the clock pulse generating circuit CPG generates system clocks ⌀_{CPU} (⌀1 to ⌀3, etc.) for the CPU of a low frequency f_{SUB} based on the basic clock pulses CK2 for timekeeping. Concretely speaking, in resuming the operation of the clock pulse generating circuit CPG, the control signals C2′ for controlling the logic gate that transmits the basic clock pulses CK2 to the input of the clock pulse generating circuit CPG, are generated by the synchronizing circuit SYNC in synchronism with the clock pulses CK2. Therefore, narrow pulses or wide pulses are not generated in the system clocks ⌀_{CPU} (⌀1 to ⌀3, etc.) that are formed by the clock pulse generating circuit CPG.

The interrupt flag INTF, on the other hand, actuates the control block of the microprocessor CPU and adds +1 to carry out the timekeeping operation as described above. The system returns again to the watch mode by the execution of the stop instruction STOP that is inserted in the interrupt processing program at the final stage of the timekeeping operation.

As described above, the system clocks ⌀_{CPU} are formed by utilizing basic clock pulses CK2 that are formed by the oscillation circuit OSC2 for timekeeping while the timekeeping operation is being carried out, and the oscillation circuit OSC1 of a high frequency is not at all operated to add +1 using the microprocessor CPU maintaining a relatively short time interval such as one second as described above. Therefore, the current is not wastefully consumed from the start of oscillation until the oscillation is stabilized.

There exist three statuses as described below when the system returns to the active mode.

One of them will now be described. When the system is in the watch mode under the condition where the flag LSON is set to the logic "1", the interrupt flag INTF is started from the external interrupt terminal INT and the system is once transferred to the subactive mode in a manner as described above. The interrupt flag INTF informs the execution block of the microprocessor CPU of the fact that the interrupt is due to an external factor, clears the flag LSON to the logic "0" by the interrupt processing so that the interrupt processing in the first stage is finished. Owing to the execution of the stop instruction STOP when the interrupt processing is finished, the system transfers to the watch mode (LSON = "0") on the upper side in the status transition diagram of Fig. 5. The interrupt flag INTF is started again from the external interrupt terminal INT, so that the active mode is assumed. In this case, the control circuit CONT generates control signals C3 so that the oscillation circuit OSC1 starts to oscillate, and the multiplexer MPX is switched to the side of the basic clock pulses CK1. After the oscillation of the oscillation circuit OSC1 is stabilized, the clock pulse generating circuit CPG resumes the operation in synchronism with the basic clock pulses CK1. Therefore, the oscillation circuit OSC1 undergoes the oscillation, and the system clocks ⌀_{CPU} (⌀1 to ⌀3, etc.) supplied to the CPU and the clock pulses ⌀_{PER} for peripheral circuits have a high frequency f_{cyc} according to the basic clock pulses CK1.

As described above, with the flag DTON being set to the logic "1" instead of applying the external interrupt two times, the watch mode (LSON = "1") is automatically changed in the system to the watch mode (LSON = "0") through the subactive mode by the external interrupt of one time, and is returned to the active mode. In other words, when the flag DTON is set to the logic "1", the control circuit CONT automatically executes the operation for switching the clocks as described above.

The remaining one stands for the case when the flag LSON is set to the logic "0" while the system is transferred from the active mode to the watch mode. In this case, the system is transferred to the active mode in response to one interrupt. This interrupt includes the interrupt by the timer circuit TM for the timekeeping operation. Attention, therefore, should be given to that switching from the watch mode to the active mode involves operation for starting the oscillation circuit OSC1 in a traditional manner.

Further, a variety of flags for designating the operations of the control circuit CONT that switches the clocks in the above embodiment are connected to the internal buses BUS, such that the content of the flag is set depending upon the instructions. Therefore, by arbitrarily setting the content (LSON) of the flag in advance at the time of executing the stop instruction, the system can be transferred, when a next interrupt signal is input, to a desired mode of either the active mode such as the standard operation mode or the subactive mode which carries out the timekeeping operation only. With the flag DTON being set, furthermore, the watch mode can be automatically returned to the active mode by one time of external interrupt as described earlier.

The functions and effects obtained from the above-mentioned embodiment of Fig. 3 are described below.
(1) Oscillation output signals are selectively transmitted to a clock generating circuit via a multiplexer, the oscillation output signals being generated by the first oscillation circuit whose oscillation operation of a relatively high frequency is controlled according to predetermined control signals and by the second oscillation circuit which steadily carries out the oscillation operation at a relatively low frequency. Furthermore, the clock generating operation is started in synchronism with the oscillation outputs that are switched via an operation mode which once stops the operation of the clock generating circuit. In this constitution, oscillation operation at a relatively high frequency of the oscillation circuit is stopped as required, and operation of the clock generating circuit is once stopped when the clock frequency is to be changed and, then, the clock generating operation is resumed in synchronism with the oscillation frequency that is changed. When the clock pulses having dissimilar frequencies are to be switched, therefore, undesired hair-like clock pulses are not produced, and the operation is stably carried out.
(2) The second oscillation circuit is used as an oscillation circuit for timekeeping, and system clocks are formed by the oscillation pulses for timekeeping in the low-power-consumption mode in which the first oscillation circuit is not in operation, such that the CPU carries out the timekeeping operation. Therefore, there is no need of starting the first oscillation circuit that is set to operate at a relatively high frequency maintaining a short interval of, for example, at least one second. This makes it possible to reduce the consumption of electric current that would be consumed in relatively large amounts by the first oscillation circuit from the start of the first oscillation circuit until the oscillation is stabilized. Therefore, the operation is stabilized and the consumption of electric power is reduced.

In the foregoing was concretely described the invention accomplished by the present inventors by way of embodiments. The present invention, however, is in no way limited to the above-mentioned embodiments only. For example, operation of the oscillation circuit OSC1 on the side of the system clocks is stopped during the watch mode and the subactive mode. However, it is also allowable to stay in the low-power-consumption mode in which the oscillation circuit OSC1 is in operation but the clock generating circuit CPG is not in operation when the flag LSON has the logic "0" or even in the watch mode by providing other flags. Since there is no time for waiting for the start of the oscillation circuit OSC1, the watch mode can be switched to the active mode at a high speed. The flags in the aforementioned embodiments may be constituted independently by the flip-flop circuits, or a bit in the control register or a given bit in the RAM may be allotted thereto.

The synchronizing circuit resumes the operation in synchronism with the basic clock pulses CK1 or CK2 obtained by switching the clock pulse generating circuit CPG, and generates the gate control signals that will be input to the clock pulse generating circuit CPG in synchronism with the above-mentioned switched basic clock pulses CK1 or CK2. Moreover, the synchronizing circuit may be constituted in various other forms. For example, the output unit of the clock pulse generating circuit CPG may be provided with a gate circuit to control the output timing thereof. Or, the flip-flop circuit constituting the clock pulse generating circuit may be forcibly reset and may then be released in synchronism with the basic clock pulse CK1 or CK2.

The foregoing description has chiefly dealt with the case where the invention accomplished by the present inventors is adapted to a 1-chip microcomputer having the low-power-consumption mode in the field of art that serves as the background of the invention. The invention, however, is in no way limited thereto only but can be widely adapted to a variety of semiconductor integrated circuit devices that supply to the internal circuits in a switched manner a plurality of clock pulses having different oscillation frequencies asynchronously.

## Claims

1. A semiconductor integrated circuit, in particular a microcomputer, comprising
first oscillation means (OSC1; DIV1) for generating a first clock signal having a first frequency,
second oscillation means (OSC2; DIV2) for generating a second clock signal having a second frequency being smaller than said first frequency,
clock generating means (MPX, CPG) coupled to said first and second oscillation means for forming first internal clock signals based on said first clock signal in a first operating mode, second internal clock signals based on said second clock signal in a second operating mode and a predetermined level signal in a third operating mode,
data processing means (CONT, EXEC; CPU) coupled to said clock generating means for operating under control of said clock generating means and
control means (CONT; SYNC) coupled to said clock generating means and said data processing means for controlling said operating modes of said clock generating means, wherein the switching between said operating modes is performed such that said first and second internal clock signals are synchronised with said first and second clock signals respectively,
characterised in that
said data processing means (CONT, EXEC; CPU) executes predetermined programs when receiving said first and second internal clock signals from said clock generating means (MPX, CPG), and stops its operation, when receiving said predetermined level signal from said clock generating means, and
that said control means (CONT; SYNC) is coupled to said first oscillation means (OSC1; DIV1) for controlling the operation of said first oscillation means such that the generation of said first clock signal is stopped in said second and third operating modes.

2. The semiconductor integrated circuit according to claim 1, wherein said first oscillation means (OSC1; DIV1) changes its operations from a non-operation state to an operation state in said third operating mode, when said data processing means (CONT, EXEC; CPU) changes its operations from said third operating mode to said first operating mode.

3. The semiconductor integrated circuit according to claim 1, further comprising a time keeping circuit (TM) being controlled on the basis of said second clock signal from said second oscillation circuit (OSC2),
wherein said time keeping circuit divides said second clock signal to form pulses for measuring time, and
wherein said data processing means (CPU) includes increment means for executing an increment operation of time data based on said pulses for measuring time.

4. The semiconductor integrated circuit according to claim 3, wherein said increment operation of said increment means is controlled on the basis of said second internal clock signals when said data processing means is in said second operating mode.

5. The semiconductor integrated circuit according to claim 4, wherein said increment means executes said increment operation on the basis of said first internal clock signals when said data processing means is in said first operating mode.

6. The semiconductor integrated circuit according to any of claims 1 to 5, wherein said control means (CONT) has at least one register (REG) for storing control data for supplying control signals to said clock generating circuit and said first oscillation circuit, respectively.

7. The semiconductor integrated circuit according to claim 6, wherein said register (REG) and said data processing means (CPU) are coupled together via an internal bus, and wherein said control data are written into said register by said data processing means (CPU).

8. The semiconductor integrated circuit according to claim 6 or 7,
wherein a condition of said clock generating circuit (CPG) is designated to produce said first internal clock signals, to produce said second internal clock signals or not to produce both said first and second internal clock signals, depending upon said control data stored in said register (REG).

9. The semiconductor integrated circuit according to any one of claims 1 to 8, further comprising first external terminals coupled to said first oscillation circuit (OSC1; DIV1) and coupled to a first external oscillator (X1), and second external terminals coupled to said second oscillation circuit (OSC2; DIV2) and coupled to a second external oscillator (X2).

10. The semiconductor integrated circuit according to any one of claims 1 to 9,
wherein said first oscillation circuit comprises a first oscillator (OSC1) and a first frequency-dividing circuit (DIV1) for dividing a frequency of output signals from said first oscillator (OSC1) and for forming said first clock signals,
wherein said second oscillation circuit comprises a second oscillator (OSC2) and a second frequency-dividing circuit (DIV2) for dividing a frequency of output signals of said second oscillator (OSC2) and for forming said second clock signals, and
wherein said clock generating circuit comprises a multiplexer (MPX) and a clock generating circuit (CPG), said multiplexer selectively supplying said first clock signals or said second clock signals to said clock generating circuit for generating said first and second internal clock signals, respectively.

11. The semiconductor integrated circuit according to any of claims 1 to 10, wherein said data processing means (CPU) includes storing means for storing said time data, a micro Read Only Memory for storing instructions designating said increment operation, and an execution unit controlled by said micro Read Only Memory.

12. The semiconductor integrated circuit according to any of claims 1 to 11,
wherein said data processing means includes a Central Processing Unit controlled on the basis of said first or second internal clock signals.

13. The semiconductor integrated circuit according to claim 6, further comprising an internal bus (BUS) coupled to said data processing means and to said register (REG),
wherein said control means further comprises a first flag (LSON) and a second flag (INTF) each of which is coupled to said internal bus,
wherein said control means supplies said clock generating means with control signals having a first state to change into said first operating mode from said third operating mode, in response to supplying data having a fourth state to said second flag when said data processing means is in said third operating mode and said first flag stores data having a fifth state, and
wherein said control means supplies said clock generating means with control signals having a second state to change into said second operating mode from said third operating mode, in response to supplying the data having the fourth state to said second flag when said data processing means is in said third operating mode and said first flag stores data having a sixth state.

14. The semiconductor integrated circuit according to claim 13, further comprising a third external terminal (INT) coupled to said second flag,
wherein said data having said fourth state is supplied from said third external terminal to said second flag.

15. The semiconductor integrated circuit according to claim 13 or 14,
wherein said data having said fourth state is supplied from said time-keeping circuit to said second flag.

16. The semiconductor integrated circuit according to claim 15, wherein said time-keeping circuit supplies said data having said fourth state to said second flag each one second.

17. The semiconductor integrated circuit according to any of claims 13 to 16,
wherein said second flag is an interrupt flag.

18. The semiconductor integrated circuit according to any of claims 13 to 17,
wherein said data processing means changes its operation from said first operating mode or said second operating mode to said third operating mode, in response to supplying said data having said first state or said second state to said register (REG) in accordance with an execution of a stop instruction by said data processing means.

19. The semiconductor integrated circuit according to any of claims 13 to 18,
wherein said data processing means supplies said data having one of said fifth state and said sixth state to said first flag via said internal bus.

20. The semiconductor integrated circuit according to claim 5, further comprising an internal bus (BUS) coupled to said data processing means and to said register (REG),
wherein said control means further comprises a flag (INTF) which is coupled to said internal bus,
wherein said control means supplies said clock generating means with control signals having a first state to change into said first operating mode from said third operating mode, in response to supplying data having a fourth state to said flag when said data processing means is in said third operating mode, and
wherein said control means supplies said clock generating means with control signals having a second state to change into said second operating mode from said third operating mode, in response to supplying the data having the fourth state to said flag when said data processing means is in said third operating mode.

21. The semiconductor integrated circuit according to claim 20, wherein said data having said fourth state is supplied from said time-keeping circuit to said flag.

22. The semiconductor integrated circuit according to claim 21, wherein said time-keeping circuit supplies said data having said fourth state to said flag each one second.

23. The semiconductor integrated circuit according to any of claims 20 to 22, wherein said flag is an interrupt flag.

24. The semiconductor integrated circuit according to any of claims 20 to 23,
wherein said data processing means changes its operation from said first operating mode or said second operating mode to said third operating mode, in response to supplying said data having said first state or said second state to said register (REG) in accordance with an execution of a stop instruction by said data processing means.

25. The semiconductor integrated circuit according to any of claims 20 to 24,
wherein said data processing means supplies said data having one of said fifth state and said sixth state to said register via said internal bus.

## Patentansprüche

1. Integrierte Halbleiterschaltung, insbesondere Mikrocomputer, mit
einer ersten Oszillatoreinrichtung (OSC1; DIV1) zum Erzeugen eines ersten Taktsignals mit einer ersten Frequenz,
einer zweiten Oszillatoreinrichtung (OSC2; DIV2) zum Erzeugen eines zweiten Taktsignals mit einer zweiten Frequenz, die kleiner ist als die erste Frequenz,
einer mit den ersten und zweiten Oszillatoreinrichtungen verbundenen Taktgeneratoreinrichtung (MPX, CPG) zum Bilden auf dem ersten Taktsignal basierender, erster interner Taktsignale bei einer ersten Betriebsart, auf dem zweiten Taktsignal basierender, zweiter interner Taktsignale bei einer zweiten Betriebsart und eines vorbestimmten Signalpegels bei einer dritten Betriebsart,
einer mit der Taktgeneratoreinrichtung gekoppelten Datenverarbeitungseinrichtung (CONT, EXEC; CPU) zum Betrieb unter Steuerung durch die Taktgeneratoreinrichtung und einer mit der Taktgeneratoreinrichtung und der Datenverarbeitungseinrichtung verbundenen Steuereinrichtung (CONT; SYNC) zum Steuern der Betriebsarten der Taktgeneratoreinrichtung, wobei das Schalten zwischen den Betriebsarten so durchgeführt wird, daß die ersten und zweiten internen Taktsignale jeweils synchron mit den ersten und zweiten Taktsignalen sind,
dadurch gekennzeichnet,
daß die Datenverarbeitungseinrichtung (CONT, EXEC; CPU) vorbestimmte Programme beim Empfang der ersten und zweiten internen Taktsignale von der ersten Taktgeneratoreinrichtung (MPX, CPG) ausführt und ihren Betrieb beim Empfang des vorbestimmten Signalpegels von der Taktgeneratoreinrichtung anhält, und
daß die Steuereinrichtung (CONT; SYNC) mit der ersten Oszillatoreinrichtung (OSC1; DIV1) zum Steuern des Betriebs der ersten Oszillatoreinrichtung verbunden ist, so daß die Erzeugung des ersten Taktsignals in der zweiten und dritten Betriebsart angehalten wird.

2. Integrierte Halbleiterschaltung gemäß Anspruch 1, wobei die erste Oszillatoreinrichtung (OSC1; DIV1) ihren Betrieb aus einem Nicht-Betriebszustand in einen Betriebszustand bei der dritten Betriebsart umschaltet, wenn die Datenverarbeitungseinrichtung (CONT, EXEC; CPU) ihren Betrieb aus der dritten Betriebsart in die erste Betriebsart umschaltet.

3. Integrierte Halbleiterschaltung gemäß Anspruch 1, die weiter eine auf der Grundlage des zweiten Taktsignals von der zweiten Oszillatorschaltung (OSC2) gesteuerte Zeitteilungsschaltung (TM) aufweist,
wobei die Zeitteilungsschaltung das zweite Taktsignal unterteilt, um Zeitmeßpulse zu bilden, und
wobei die Datenverarbeitungseinrichtung (CPU) eine Inkrementierschaltung zum Ausführen eines auf den Zeitmeßpulsen basierenden Inkrementierbetriebs der Zeitdaten enthält.

4. Integrierte Halbleiterschaltung gemäß Anspruch 3, wobei der Inkrementierbetrieb der Inkrementiereinrichtung auf der Grundlage der zweiten internen Taktsignale gesteuert wird, wenn die Datenverarbeitungseinrichtung sich in der zweiten Betriebsart befindet.

5. Integrierte Halbleiterschaltung gemäß Anspruch 4, wobei die Inkrementiereinrichtung den Inkrementierbetrieb auf der Grundlage der ersten internen Taktsignale ausführt, wenn die Datenverarbeitungseinrichtung sich in der ersten Betriebsart befindet.

6. Integrierte Halbleiterschaltung gemäß einem der Ansprüche 1 bis 5, wobei die Steuereinrichtung (CONT) wenigstens ein Register (REG) zum Speichern der Steuerdaten zum Liefern von Steuersignalen an die Taktgeneratorschaltung und an die erste Oszillatorschaltung aufweist.

7. Integrierte Halbleiterschaltung gemäß Anspruch 6, wobei das Register (REG) und die Datenverarbeitungseinrichtung (CPU) über einen internen Bus miteinander verbunden sind und die Steuerdaten durch die Datenverarbeitungseinrichtung (CPU) in das Register geschrieben werden.

8. Integrierte Halbleiterschaltung gemäß Anspruch 6 oder 7, wobei ein Zustand der Taktgeneratorschaltung (CPG) dazu bestimmt ist, die ersten internen Taktsignale, die zweiten internen Taktsignale oder keines der beiden ersten und zweiten internen Taktsignale abhängig von den im Register (REG) gespeicherten Steuerdaten zu erzeugen.

9. Integrierte Halbleiterschaltung gemäß einem der Ansprüche 1 bis 8, die weiter mit der ersten Oszillatorschaltung (OSC1; DIV1) und einem ersten externen Oszillator (X1) verbundene, erste externe Anschlüsse und mit der zweiten Oszillatorschaltung (OSC2; DIV2) und einem zweiten externen Oszillator (X2) verbundene, zweite externe Anschlüsse aufweist.

10. Integrierte Halbleiterschaltung gemäß einem der Ansprüche 1 bis 9,
wobei die erste Oszillatorschaltung einen ersten Oszillator (OSC1) und eine erste Frequenzteilerschaltung (DIV1) zum Unterteilen einer Frequenz der Ausgangssignale vom ersten Oszillator (OSC1) und zum Bilden der ersten internen Taktsignale aufweist,
wobei die zweite Oszillatorschaltung einen zweiten Oszillator (OSC2) und eine zweite Frequenzteilerschaltung (DIV2) zum Unterteilen einer Frequenz der Ausgangssignale vom zweiten Oszillator (OSC2) und zum Bilden zweiter Taktsignale aufweist, und
wobei die Taktgeneratorschaltung einen Multiplexer (MPX) und eine Taktgeneratorschaltung (CPG) aufweist, wobei der Multiplexer wahlweise die ersten oder zweiten Taktsignale an die Taktgeneratorschaltung zum Erzeugen der ersten bzw. zweiten internen Taktsignale liefert.

11. Integrierte Halbleiterschaltung gemäß einem der Ansprüche 1 bis 10, wobei die Datenverarbeitungseinrichtung (CPU) eine Speichereinrichtung zum Speichern der Zeitdaten, einen Micro-Read-Only-Memory zum Speichern der den Inkrementierbetrieb bestimmenden Befehle und eine durch den Micro-Read-Only-Memory gesteuerte Ausführeinrichtung aufweist.

12. Integrierte Halbleiterschaltung gemäß einem der Ansprüche 1 bis 11,
wobei die Datenverarbeitungseinrichtung eine auf der Grundlage der ersten oder zweiten internen Taktsignale gesteuerte Central-Processing-Unit aufweist.

13. Integrierte Halbleiterschaltung gemäß Anspruch 6, die weiter einen mit der Datenverarbeitungseinrichtung und dem Register (REG) verbundenen internen Bus (BUS) aufweist,
wobei die Steuereinrichtung weiter eine jeweils mit dem internen Bus verbundene erste Kennung (LSON) und zweite Kennung (INTF) aufweist,
wobei die Steuereinrichtung die Taktgeneratoreinrichtung mit einen ersten Zustand besitzenden Steuersignalen versorgt, um von der dritten Betriebsart in die erste Betriebsart in Reaktion auf ein Liefern von einen vierten Zustand besitzenden Daten an die zweite Kennung umzuschalten, wenn die Datenverarbeitungseinrichtung sich in der dritten Betriebsart befindet und die erste Kennung einen fünften Zustand besitzende Daten speichert, und
wobei die Steuereinrichtung der Taktgeneratoreinrichtung einen zweiten Zustand besitzende Steuerdaten liefert, um aus der dritten Betriebsart in die zweite Betriebsart in Reaktion auf ein Liefern von den vierten Zustand besitzenden Daten an die zweite Kennung umzuschalten, wenn die Datenverarbeitungseinrichtung sich in der dritten Betriebsart befindet und die erste Kennung einen sechsten Zustand besitzende Daten speichert.

14. Integrierte Halbleiterschaltung gemäß Anspruch 13, die weiter einen mit der zweiten Kennung verbundenen dritten externen Ausgang (INT) aufweist,
wobei die den vierten Zustand besitzenden Daten vom dritten externen Anschluß an die zweite Kennung geliefert werden.

15. Integrierte Halbleiterschaltung gemäß Anspruch 13 oder 14,
wobei die den vierten Zustand besitzenden Daten von der Zeitteilerschaltung an die zweite Kennung geliefert werden.

16. Integrierte Halbleiterschaltung gemäß Anspruch 15, wobei die Zeitteilerschaltung jede Sekunde die den vierten Zustand besitzenden Daten an die zweite Kennung liefert.

17. Integrierte Halbleiterschaltung gemäß einem der Ansprüche 13 bis 16,
wobei die zweite Kennung eine Unterbrechungskennung ist.

18. Integrierte Halbleiterschaltung gemäß einem der Ansprüche 13 bis 17,
wobei die Datenverarbeitungseinrichtung ihren Betrieb von der ersten Betriebsart oder der zweiten Betriebsart auf die dritte Betriebsart in Reaktion auf ein Liefern der den ersten oder zweiten Zustand besitzenden Daten an das Register (REG) in Übereinstimmung mit einer Ausführung eines Stopbefehls durch die Datenverarbeitungseinrichtung umschaltet.

19. Integrierte Halbleiterschaltung gemäß einem der Ansprüche 13 bis 18,
wobei die Datenverarbeitungseinrichtung die den fünften Zustand oder sechsten Zustand besitzenden Daten an die erste Kennung über den internen Bus liefert.

20. Integrierte Halbleiterschaltung gemäß Anspruch 5, die weiter einen mit der Datenverarbeitungseinrichtung und dem Register (REG) verbundenen internen Bus (BUS) aufweist,
wobei die Steuereinrichtung weiter eine mit dem internen Bus verbundene Kennung (INTF) aufweist,
wobei die Steuereinrichtung die Taktgeneratoreinrichtung mit einen ersten Zustand besitzenden Steuersignalen beliefert, um aus der dritten Betriebsart in die erste Betriebsart in Reaktion auf ein Liefern von einen vierten Zustand besitzenden Daten an die Kennung umzuschalten, wenn die Datenverarbeitungseinrichtung sich in der dritten Betriebsart befindet, und
wobei die Steuereinrichtung die Taktgeneratoreinrichtung mit einen zweiten Zustand besitzenden Steuersignalen versorgt, um aus der dritten Betriebsart in die zweite Betriebsart in Reaktion auf ein Liefern von den vierten Zustand besitzenden Daten an die Kennung umzuschalten, wenn die Datenverarbeitungseinrichtung sich in der dritten Betriebsart befindet.

21. Integrierte Halbleiterschaltung gemäß Anspruch 20, wobei die den vierten Zustand besitzenden Daten von der Zeitteilerschaltung an die Kennung geliefert werden.

22. Integrierte Halbleiterschaltung gemäß Anspruch 21, wobei die Zeitteilerschaltung jede Sekunde die den vierten Zustand besitzenden Daten an die Kennung liefert.

23. Integrierte Halbleiterschaltung gemäß einem der Ansprüche 20 bis 22, wobei die Kennung eine Unterbrechungskennung ist.

24. Integrierte Halbleiterschaltung gemäß einem der Ansprüche 20 bis 23,
wobei die Datenverarbeitungseinrichtung ihren Betrieb aus der ersten Betriebsart oder der zweiten Betriebsart in die dritte Betriebsart in Reaktion auf ein Liefern von den den ersten Zustand oder den zweiten Zustand besitzenden Daten an das Register (REG) in Übereinstimmung mit einer Ausführung eines Haltebefehls durch die Datenverarbeitungseinrichtung umschaltet.

25. Integrierte Halbleiterschaltung gemäß einem der Ansprüche 20 bis 24,
wobei die Datenverarbeitungseinrichtung die den fünften Zustand oder den sechsten Zustand besitzenden Daten an das Register über den internen Bus liefert.

## Revendications

1. Circuit intégré à semiconducteurs, notamment un micro-ordinateur, comprenant
des premiers moyens d'oscillation (OSC1; DIV1) pour produire un premier signal d'horloge possédant une première fréquence,
des seconds moyens d'oscillation (OSC2; DIV2) pour produire un second signal d'horloge possédant une seconde fréquence inférieure à ladite première fréquence,
des moyens (MPX, CPG) de production de signaux d'horloge, couplés auxdits premiers et seconds moyens d'oscillation pour former des premiers signaux d'horloge interne sur la base dudit premier signal d'horloge dans un premier mode de fonctionnement, des seconds signaux d'horloge interne sur la base dudit second signal d'horloge dans un second mode de fonctionnement et un signal à niveau prédéterminé dans un troisième mode de fonctionnement,
des moyens de traitement de données (CONT, EXEC; CPU) couplés auxdits moyens de production de signaux d'horloge pour fonctionner sous la commande desdits moyens de production de signaux d'horloge, et
des moyens de commande (CONT; SYNC) couplés auxdits moyens de production de signaux d'horloge et auxdits moyens de traitement de données pour commander lesdits modes de fonctionnement desdits moyens de production de signaux d'horloge, la commutation entre lesdits modes de fonctionnement étant exécutée de telle sorte que lesdits premiers et seconds signaux d'horloge interne sont synchronisés respectivement sur lesdits premiers et seconds signaux d'horloge,
caractérisé en ce que
lesdits moyens de traitement de données (CONT, EXEC; CPU) exécutent des programmes prédéterminés lors de la réception desdits premiers et seconds signaux d'horloge interne en provenance desdits moyens (MPX, CPG) de production de signaux d'horloge, et arrêtent leur fonctionnement lors de la réception dudit signal à niveau prédéterminé provenant desdits moyens de production de signaux d'horloge, et
que lesdits moyens de commande (CONT; SYNC) sont couplés auxdits premiers moyens d'oscillation (OSC1; DIV1) pour la commande du fonctionnement desdits premiers moyens d'oscillation de sorte que la production dudit premier signal d'horloge est arrêtée dans lesdits second et troisième modes de fonctionnement.

2. Circuit intégré à semiconducteurs selon la revendication 1, dans lequel lesdits premiers moyens d'oscillation (OSC1; DIV1) commutent leurs fonctionnements d'un état de non fonctionnement à un état de fonctionnement dans ledit troisième mode de fonctionnement, lorsque lesdits moyens de traitement de données (CONT, EXEC; CPU) commutent leurs fonctionnements dudit troisième mode de fonctionnement audit premier mode de fonctionnement.

3. Circuit intégré à semiconducteurs selon la revendication 1, comprenant en outre un circuit de pointage (TM) commandé sur la base dudit second signal d'horloge délivré par ledit second circuit d'oscillation (OSC2),
ledit circuit de pointage divisant ledit second signal d'horloge pour former des impulsions pour la mesure du temps,
lesdits moyens de traitement de données (CPU) comprenantt des moyens d'incrémentation pour appliquer une opération d'incrémentation de données de temps sur la base desdites impulsions pour la mesure du temps.

4. Circuit intégré à semiconducteurs selon la revendication 3, dans lequel ladite opération d'incrémentation desdits moyens d'incrémentation est commandée sur la base desdits seconds signaux d'horloge interne, lorsque lesdits moyens de traitement de données sont dans ledit second mode de fonctionnement.

5. Circuit intégré à semiconducteurs selon la revendication 4, dans lequel lesdits moyens d'incrémentation exécutent ladite opération d'incrémentation sur la base desdits premiers signaux d'horloge interne lorsque lesdits moyens de traitement de données sont dans ledit premier mode de fonctionnement.

6. Circuit intégré à semiconducteurs selon l'une quelconque des revendications 1 à 5, dans lequel lesdits moyens de commande (CONT) possèdent au moins un registre (REG) servant à mémoriser des données de commande pour l'envoi de signaux de commande respectivement audit circuit de production de signaux d'horloge et audit premier circuit d'oscillation.

7. Circuit intégré à semiconducteurs selon la revendication 6, dans lequel ledit registre (REG) et lesdits moyens de traitement de données (CPU) sont couplés entre eux par l'intermédiaire d'un bus interne , et dans lequel lesdites données de commande sont enregistrées dans ledit registre par lesdits moyens de traitement de données (CPU).

8. Circuit intégré à semiconducteurs selon la revendication 6 ou 7, dans lequel une condition dudit circuit (CPG) de production de signaux d'horloge est conçue de manière à produire lesdits premiers signaux d'horloge interne , produire lesdits seconds signaux d'horloge interne ou ne pas produire à la fois lesdits premiers et seconds signaux d'horloge interne , en fonction desdites données de commande mémorisées dans ledit registre (REG).

9. Circuit intégré à semiconducteurs selon l'une quelconque des revendications 1 à 8, comprenant en outre des premières bornes externes couplées audit premier circuit oscillant (OSC1; DIV1) et couplées à un premier oscillateur externe (X1), et des secondes bornes externes couplées audit second circuit d'oscillation (OSC2; DIV2) et couplées à un second oscillateur externe (X2).

10. Circuit intégré à semiconducteurs selon l'une quelconque des revendications 1 à 9,
dans lequel ledit premier circuit d'oscillation comprend un premier oscillateur (OSC1) et un premier circuit diviseur de fréquence (DIV1) pour diviser une fréquence de signaux de sortie délivrés par ledit premier oscillateur (OSC1) et pour former lesdits premiers signaux d'horloge,
dans lequel ledit second circuit d'oscillation comprend un second oscillateur (OSC2) et un second diviseur de fréquence (DIV2) pour diviser une fréquence de signaux de sortie dudit second oscillateur (OSC2) et former lesdits seconds signaux d'horloge, et
dans lequel ledit circuit de production de signaux d'horloge comprend un multiplexeur (MPX) et un circuit (CPG) de production de signaux d'horloge, ledit multiplexeur envoyant de façon sélective lesdits premiers signaux d'horloge ou lesdits seconds signaux d'horloge audit circuit de production de signaux d'horloge pour produire respectivement lesdits premiers et seconds signaux d'horloge interne.

11. Circuit intégré à semiconducteurs selon l'une quelconque des revendications 1 à 10, dans lequel lesdits moyens de traitement de données (CPU) comprennent des moyens de mémoire pour mémoriser lesdites données de temps, une micro-mémoire morte pour mémoriser des instructions désignant ladite opération d'incrémentation, et une unité d'exécution commandée par la micro-mémoire morte.

12. Circuit intégré à semiconducteurs selon l'une queconque des revendications 1 à 11,
dans lequel lesdits moyens de traitement de données comprennent une unité centrale de traitement commandée sur la base desdits premiers ou seconds signaux d'horloge interne.

13. Circuit intégré à semiconducteurs selon la revendication 6, comprenant en outre un bus interne (BUS) couplé auxdits moyens de traitement de données et audit registre (REG),
dans lequel lesdits moyens de commande comprennent en outre un premier drapeau (LSON) et un second drapeau (INTF), dont chacun est couplé audit bus interne,
dans lequel lesdits moyens de commande envoient auxdits moyens de production de signaux d'horloge, des signaux de commande possédant un premier état pour le passage dudit troisième mode de fonctionnement audit premier mode de fonctionnement, en réponse à l'envoi de données possédant un quatrième état audit second drapeau lorsque lesdits moyens de traitement de données sont dans ledit troisième mode de fonctionnement et ledit premier drapeau mémorise des données possédant un cinquième état, et
dans lequel lesdits moyens de commande envoient auxdits moyens de production de signaux d'horloge, des signaux de commande possédant un second état pour le passage dudit troisième mode de fonctionnement audit second mode de fonctionnement, en réponse à l'envoi des données possédant le quatrième état audit second drapeau lorsque lesdits moyens de traitement de données sont dans ledit troisième mode de fonctionnement et ledit premier drapeau mémorise des données possédant un sixième état.

14. Circuit intégré à semiconducteurs selon la revendication 13, comprenant en outre une troisième borne externe (INT) couplée audit second drapeau, et
dans lequel lesdites données possédant ledit quatrième état sont envoyées depuis ladite troisième borne externe audit second drapeau.

15. Circuit intégré à semiconducteurs selon la revendication 13 ou 14,
dans lequel lesdites données possédant ledit quatrième état sont envoyées par ledit circuit de pointage audit second drapeau.

16. Circuit intégré à semiconducteurs selon la revendication 15, dans lequel ledit circuit de pointage envoie lesdites données possédant ledit quatrième état audit second drapeau, à chaque seconde.

17. Circuit intégré à semiconducteurs selon l'une quelconque des revendications 13 à 16,
dans lequel ledit second drapeau est un drapeau d'interruption.

18. Circuit intégré à semiconducteurs selon l'une quelconque des revendications 13 à 17,
dans lequel lesdits moyens de traitement de données commutent leur fonctionnement depuis ledit premier mode de fonctionnement ou ledit second mode de fonctionnement sur ledit troisième mode de fonctionnement, en réponse à l'envoi desdites données possédant ledit premier état ou ledit second état audit registre (REG) en fonction d'une exécution d'une instruction d'arrêt par lesdits moyens de traitement de données.

19. Circuit intégré à semiconducteurs selon l'une quelconque des revendications 13 à 18,
dans lequel lesdits moyens de traitement de données envoient lesdites données possédant ledit cinquième état ou ledit sixième état audit premier drapeau par l'intermédiaire dudit bus interne.

20. Circuit intégré à semiconducteurs selon la revendicatrion 5, comprenant en outre un bus interne (BUS) couplé auxdits moyens de traitement de données et audit registre (REG),
dans lequel lesdits moyens de commande comprennent en outre un drapeau (INTF) qui est couplé audit bus interne,
dans lequel lesdits moyens de commande envoient auxdits moyens de production de signaux d'horloge, des signaux de commande possédant un premier état pour passer dudit troisième mode de fonctionnement audit premier mode de fonctionnement, en réponse à l'envoi de données possédant un quatrième état audit drapeau, lorsque lesdits moyens de traitement de données sont dans ledit troisième mode de fonctionnement, et
dans lequel lesdits moyens de commande envoient auxdits moyens de production de signaux d'horloge, des signaux de commande possédant un second état pour le passage dudit troisième mode de fonctionnement audit second mode de fonctionnement, en réponse à l'envoi des données possédant le quatrième état audit drapeau lorsque lesdits moyens de traitement de données sont dans ledit troisième mode de fonctionnement.

21. Circuit intégré à semiconducteurs selon la revendication 20, dans lequel lesdites données possédant ledit quatrième état sont envoyées par ledit circuit de pointage audit drapeau.

22. Circuit intégré à semiconducteurs selon la revendication 21, dans lequel ledit circuit de pointage envoie lesdites données possédant ledit quatrième état audit drapeau, à chaque seconde.

23. Circuit intégré à semiconducteurs selon l'une quelconque des revendications 20 à 22, dans lequel ledit drapeau est un drapeau d'interruption.

24. Circuit intégré à semiconducteurs selon l'une quelconque des revendications 20 à 23,
dans lequel lesdits moyens de traitement de données commutent leur fonctionnement depuis ledit premier mode de fonctionnement ou ledit second mode de fonctionnement sur ledit troisième mode de fonctionnement, en réponse à l'envoi desdites données possédant ledit premier état ou ledit second état audit registre (REG) en fonction d'une exécution d'une instruction d'arrêt par lesdits moyens de traitement de données.

25. Circuit intégré à semiconducteurs selon l'une quelconque des revendications 20 à 24,
dans lequel lesdits moyens de traitement de données envoient lesdites données possédant ledit cinquième état ou ledit sixième état audit registre par l'intermédiaire dudit bus interne.
